# EUROPÄISCHE PATENTSCHRIFT

(11) **EP 3 380 362 B1**
(45) Veröffentlichungstag und Bekanntmachung des Hinweises auf die Patenterteilung: **31.07.2019**
(21) Anmeldenummer: 16804682.9
(22) Anmeldetag: 14.11.2016
(51) Int. Cl.: B60Q 1/46

(54) **KRAFTFAHRZEUGSCHEINWERFER MIT EINER INTELLIGENTEN AUTOBAHN-LICHTHUPE**
MOTOR VEHICLE HEADLIGHT WITH AN INTELLIGENT MOTORWAY FLASHER
PROJECTEUR DE VÉHICULE AVEC UN AVERTISSEUR LUMINEUX INTELLIGENT POUR AUTOROUTE

(30) Priorität: 25.11.2015 AT 510062015
(43) Veröffentlichungstag der Anmeldung: 03.10.2018
(73) Patentinhaber: ZKW Group GmbH, 3250 Wieselburg (AT)
(72) Erfinder: MAYER, Peter, 3371 Neumarkt an der Ybbs (AT)
(74) Vertreter: Patentanwaltskanzlei Matschnig & Forsthuber OG
(86) Internationale Anmeldenummer: PCT/AT2016/060109
(87) Internationale Veröffentlichungsnummer: WO 2017/088001

(56) Entgegenhaltungen:
- EP-A2- 2 567 866
- EP-A2- 2 597 364
- AT-U1- 4 351
- DE-A1-102013 220 341

## Beschreibung

Die Erfindung betrifft eine Steuerungsvorrichtung zur Ansteuerung von zumindest einer Beleuchtungsvorrichtung für ein Kraftfahrzeug oder zur Ansteuerung von zumindest einem Kraftfahrzeugscheinwerfers, welcher zumindest eine solche Beleuchtungsvorrichtung aufweist, welche zumindest eine Beleuchtungsvorrichtung zumindest zur Erzeugung einer Lichthupen-Signalisierungsfunktion eingerichtet ist, wobei bei einem Aktivieren der Lichthupen-Signalisierungsfunktion die Steuerungsvorrichtung die zumindest eine Beleuchtungsvorrichtung oder den zumindest einen Kraftfahrzeugscheinwerfer derart ansteuert, dass von der zumindest einen Beleuchtungsvorrichtung eine Lichthupen-Lichtverteilung, insbesondere in Form einer Fernlichtverteilung, insbesondere für einen definierten Zeitraum, in einem Bereich vor der zumindest einen Beleuchtungsvorrichtung oder in einem Bereich vor dem Kraftfahrzeug, erzeugt wird.

Weiters betrifft die Erfindung eine Beleuchtungsvorrichtung für ein Kraftfahrzeug bzw. für einen Kraftfahrzeugscheinwerfer, welche zumindest eine Beleuchtungsvorrichtung zumindest zur Erzeugung einer Lichthupen-Signalisierungsfunktion eingerichtet ist, und wobei der Beleuchtungsvorrichtung eine Steuerungsvorrichtung zugeordnet ist oder die Beleuchtungsvorrichtung eine Steuerungsvorrichtung umfasst, und wobei bei einem Aktivieren der Lichthupen-Signalisierungsfunktion die Steuerungsvorrichtung die zumindest eine Beleuchtungsvorrichtung derart ansteuert, dass von der zumindest einen Beleuchtungsvorrichtung eine Lichthupen-Lichtverteilung, insbesondere in Form einer Fernlichtverteilung, insbesondere für einen definierten Zeitraum, in einem Bereich vor der zumindest einen Beleuchtungsvorrichtung oder in einem Bereich vor dem Kraftfahrzeug, erzeugt wird.

Außerdem betrifft die Erfindung einen Kraftfahrzeugscheinwerfer, welcher zumindest eine oben beschriebene Beleuchtungsvorrichtung umfasst, sowie ein Beleuchtungsvorrichtungssystem für ein Kraftfahrzeug, wobei das Beleuchtungsvorrichtungssystem zwei oben genannte Kraftfahrzeugscheinwerfer, einen linken und einen rechten Kraftfahrzeugscheinwerfer, umfasst.

Schließlich betrifft die Erfindung noch ein Kraftfahrzeug mit zumindest einem oben genannten, insbesondere zwei solchen Kraftfahrzeugscheinwerfern bzw. mit einem oben erwähnten Beleuchtungsvorrichtungssystem, sowie ein Verfahren zum Ansteuern von zumindest einer Beleuchtungsvorrichtung oder von zumindest einem Kraftfahrzeugscheinwerfer oder von zumindest einer Beleuchtungsvorrichtungssystems.

Kraftfahrzeuge verfügen über eine sogenannte "Lichthupe-Funktion". Bei dieser Lichthupen-Funktion wird, in der Regel durch Betätigen eines entsprechenden Betätigungselementes (Lichtschalter) durch den Fahrer des Kraftfahrzeuges, kurzfristig eine Lichthupen-Lichtverteilung von den Scheinwerfern des Kraftfahrzeuges erzeugt ("Aufblenden"). Konkret wird dabei üblicherweise für einen kurzen Zeitraum das Fernlicht aktiviert, dementsprechend handelt es sich üblicherweise bei der Lichthupen-Lichtverteilung um eine Fernlichtverteilung, die für einen kurzen Zeitraum aktiviert wird. Das Dokument EP 2 567 866 A2 offenbart beispielsweise einen Fernlichtscheinwerfer, der die Funktionalität einer Lichthupe ermöglicht. Es ist vorgesehen, dass hierbei alle Leuchtmittel des Fernlichtscheinwerfers gleichzeitig eingeschaltet und ausgeschaltet werden.

Die Lichthupe dient dazu, anderen Verkehrsteilnehmern Signale übermitteln zu können, beispielsweise um auf bestimmte Gefahren, Verkehrssituationen, etc. aufmerksam machen zu können.

Beispielsweise ist dabei auch das sogenannte "Flash-to-pass" bekannt, bei dem insbesondere auf einer zwei- oder mehrspurigen, lediglich in eine Fahrtrichtung befahrbaren Fahrbahn durch Aktivieren der Lichthupe einem auf einer Fahrspur vorausfahrenden, in der Regel langsameren, Kraftfahrzeug(lenker) der Wunsch, die Fahrbahn zum Überholen freizumachen, sodass überholt werden kann, angezeigt werden soll.

Eine solche lediglich in eine Richtung befahrbare Fahrbahn weist eine "langsame" Fahrspur (bei Rechtsverkehr die Fahrspur ganz rechts, bei Linksverkehr die Fahrspur ganz links) sowie eine oder mehrere Überholspuren auf, wobei die Fahrspur ganz links (bei Rechtsverkehr) bzw. die Fahrspur ganz rechts (bei Linksverkehr) die sogenannte "schnellste" Fahrspur ist.

Beispielsweise weist eine Autobahn in der Regel zwei in entgegengesetzte Fahrtrichtungen befahrbare Fahrbahnen auf, wobei jede Fahrbahn zwei oder mehr Fahrspuren aufweist.

Im Zusammenhang mit dem oben beschriebenen "Flash-to-pass" wird die Lichthupe in der Regel dann eingesetzt, wenn sich ein vorausfahrendes Kraftfahrzeug auf einer Überholspur, insbesondere auf der schnellsten Fahrspur befindet.

Nachteilig beim Einsatz der Lichthupe, insbesondere im Zusammenhang mit dem "Flash-to-pass" ist dabei allerdings, dass durch die erzeugte Fernlichtverteilung auch Verkehrsteilnehmer, d.h. die Insassen, insbesondere die Lenker von Kraftfahrzeugen auf anderen Fahrspuren der Fahrbahn geblendet werden können, wodurch diese irritiert und/oder abgelenkt werden können.

Es ist eine Aufgabe der Erfindung, das oben genannte Problem zu lösen.

Diese Aufgabe wird mit einer eingangs erwähnten Steuerungsvorrichtung dadurch gelöst, dass erfindungsgemäß
die Steuerungsvorrichtung Fahrbahn-Informationen von einer Fahrbahnerkennungsvorrichtung erhält, welche Fahrbahn-Informationen
- zumindest Informationen darüber beinhalten, ob eine von dem Kraftfahrzeug befahrene Fahrbahn lediglich in eine Fahrtrichtung befahrbar ist und ob die Fahrbahn eine oder mehrere Fahrspuren aufweist, und/oder
- zumindest Informationen darüber beinhalten, ob eine bzw. die von dem Kraftfahrzeug befahrene Fahrbahn lediglich in eine Fahrtrichtung befahrbar ist und welche Anzahl an Fahrspuren die Fahrbahn aufweist,
   und wobei die Steuerungsvorrichtung Objekt-Informationen von zumindest einem Objekterkennungssystem erhält, welches Objekterkennungssystem die vor der Beleuchtungsvorrichtung bzw. dem Kraftfahrzeug liegende Umgebung beobachtet, wobei die Objekt-Informationen zumindest Informationen beinhalten,
- ob sich auf derselben Fahrspur, die von dem Kraftfahrzeug befahren wird, ein Fahrzeugobjekt, insbesondere ein Kraftfahrzeugobjekt, insbesondere unmittelbar, vor dem Kraftfahrzeug befindet, und vorzugsweise, in welcher Entfernung sich das Fahrzeugobjekt, insbesondere das Kraftfahrzeugobjekt befindet, und/oder
- wo sich auf der Fahrbahn in Fahrtrichtung gesehen von dem Kraftfahrzeug Fahrzeugobjekte, insbesondere Kraftfahrzeugobjekte befinden, und vorzugsweise in welcher Distanz zu dem Kraftfahrzeug sich diese Fahrzeugobjekte, insbesondere Kraftfahrzeugobjekte befinden,
   und wobei bei einem Aktivieren der Lichthupen-Signalisierungsfunktion die Steuerungsvorrichtung im Falle, dass
- sich das Kraftfahrzeug auf einer in eine Richtung befahrbaren Fahrbahn mit zwei oder mehr Fahrspuren befindet, und
- auf der Fahrspur des Kraftfahrzeuges, dem Kraftfahrzeug, insbesondere unmittelbar, vorausfahrend, ein Fahrzeugobjekt, insbesondere ein Kraftfahrzeugobjekt, befindet,
die zumindest eine Beleuchtungsvorrichtung, welche dazu eingerichtet ist, zumindest eine modifizierte Lichthupen-Lichtverteilung, insbesondere eine modifizierte Fernlichtverteilung zu erzeugen, bei welcher modifizierten Lichthupen-Lichtverteilung, insbesondere modifizierten Fernlichtverteilung, lediglich ein oder mehrere Teilbereiche des von der (nicht modifizierten) Lichthupen-Lichtverteilung, insbesondere der Fernlichtverteilung, beleuchtbaren Bereiches, beleuchtet werden, bzw. den zumindest einen Kraftfahrzeugscheinwerfer, derart ansteuert, dass, vorzugsweise für die definierte Zeitdauer, eine derart modifizierte Lichthupen-Lichtverteilung, insbesondere eine derart modifizierte Fernlichtverteilung, erzeugt wird, dass im Wesentlichen lediglich das auf der Fahrspur des Kraftfahrzeuges, insbesondere unmittelbar, vorausfahrende Fahrzeugobjekt, insbesondere Kraftfahrzeugobjekt, beleuchtet wird.

Erfindungsgemäß wird eine bekannte Fernlichtverteilung räumlich eingeschränkt auf den direkt vorausfahrenden Verkehrsteilnehmer, welcher die Fahrspur blockiert. Dazu wird ermittelt, ob man sich das Kraftfahrzeug, dessen Lichthupe betätigt werden soll, auf einer zwei- oder mehrspurigen Fahrbahn, z.B. auf einer Autobahn befindet. Wird ein vorausfahrendes Kraftfahrzeug, insbesondere innerhalb eines bestimmten Winkelbereichs und Entfernungsbereichs, erkannt, so wird bei Betätigen der Lichthupen-Funktion lediglich der von dem vorausfahrenden Fahrzeug eingenommene Winkelbereich beleuchtet. Fahrzeuge auf anderen Spuren werden ausgeblendet bzw. nicht beleuchtet, wodurch die Insassen dieser Fahrzeug, insbesondere Insassen der Fahrzeuge auf langsameren und insbesondere der langsamsten Fahrspur, nicht abgelenkt werden.

Vorteilhafte Ausgestaltungen der Steuerungsvorrichtung sind im Folgenden angegeben, wobei diese Ausgestaltungen jede für sich alleine oder in beliebiger Kombination realisiert sein können:
- bei einer Beleuchtungsvorrichtung, welche eine Lichthupen-Lichtverteilung, vorzugsweise eine Fernlichtverteilung, aus einzelnen Lichtsegmenten, z.B. horizontal nebeneinander und/oder vertikal übereinander liegenden Lichtsegmenten, aufbaut, steuert die Steuerungsvorrichtung die Beleuchtungsvorrichtung derart an, dass zur Erzeugung einer modifizierten Lichthupen-Lichtverteilung, insbesondere einer modifizierten Fernlichtverteilung, Lichtsegmente nicht erzeugt, d.h. die entsprechenden Bereiche nicht beleuchtet werden. Eine segmentierte Lichtverteilung, z.B. Fernlichtverteilung, kann beispielsweise mit Matrix-Scheinwerfern/ Beleuchtungsvorrichtungen, Pixel-Lite-Scheinwerfern, Laserscanning-Beam-Scheinwerfern, Scheinwerfern basierend auf Digital Light Processing (DLP-Technologie), Scheinwerfer die Mikrospiegelarrays enthalten, etc. erzeugt werden;
- die von dem Objekterkennungssystem ermittelten Objekt-Informationen enthalten weiters einen Objekt-Winkelbereich, welcher von einem auf derselben Fahrspur, insbesondere unmittelbar, vorausfahrenden Fahrzeugobjekt, insbesondere Kraftfahrzeugobjekt, eingenommen wird oder davon abhängig ist, wobei in letzterem Fall z.B. ein zusätzlicher seitlicher Offset vorgesehen ist, damit der beleuchtete Bereich etwas breiter ist als die Fahrzeugbreite des vorausfahrenden Bereiches;
- die von dem Objekterkennungssystem ermittelten Objekt-Informationen enthalten weiters eine Distanz, in welcher sich ein auf derselben Fahrspur, insbesondere unmittelbar, vorausfahrendes Fahrzeugobjekt, insbesondere Kraftfahrzeugobjekt, befindet;
- die Steuerungsvorrichtung steuert im Fall, dass sich innerhalb eines definierten Winkelbereiches ein Fahrzeug, insbesondere ein Kraftfahrzeug befindet, bei einem Aktivieren der Lichthupen-Signalisierungsfunktion die zumindest eine Beleuchtungsvorrichtung bzw. den zumindest einen Kraftfahrzeugscheinwerfer derart an, dass, vorzugsweise für die definierte Zeitdauer, die modifizierte Lichthupen-Lichtverteilung, insbesondere die modifizierte Fernlichtverteilung, derart erzeugt wird, dass im Wesentlichen lediglich der Objekt-Winkelbereich beleuchtet wird;
- prinzipiell kann die modifizierte Lichthupen-Lichtverteilung, insbesondere die modifizierte Fernlichtverteilung fix eingestellt sein. Vorzugsweise ist aber vorgesehen, dass diese jeweils an die Gegebenheiten der Fahrbahn (z. B. Breite der Fahrspur) und/oder an die Entfernung des vorausfahrenden Fahrzeugs, d.h. insbesondere flexibel, anpasst wird, sodass sie vorzugsweise auf das unmittelbar vorausfahrende Kraftfahrzeug begrenzt werden kann;
- die Steuerungsvorrichtung aktiviert die modifizierte Lichthupen-Lichtverteilung, vorzugsweise Fernlichtverteilung, nur, wenn sich das auf derselben Fahrspur unmittelbar vorausfahrende Fahrzeugobjekt, insbesondere Kraftfahrzeugobjekt, in einer Distanz d befindet, welche kleiner ist als eine vorgebbare oder vorgegebene Mindestdistanz dmin. Für den Fall, dass d größer gleich dmin ist, wird die "normale", nicht modifizierte Lichthupen-Lichtverteilung aktiviert;
- die Steuerungsvorrichtung aktiviert die modifizierte Lichthupen-Lichtverteilung, vorzugsweise Fernlichtverteilung, nur, wenn sich das Kraftfahrzeug auf der schnellsten Fahrspur befindet. Diese Informationen werden vorzugsweise mittels der Fahrbahnerkennungsvorrichtung ermittelt und sind in den Fahrbahn-Informationen enthalten. Die erfindungsgemäße räumliche Beschränkung der Fernlichtverteilung erfolgt entsprechend nur, wenn sich das Kraftfahrzeug, dessen Lichthupe aktiviert wird, auf der schnellsten Fahrspur befindet.

Weiters wird diese Aufgabe mit einer eingangs erwähnten Beleuchtungsvorrichtung dadurch gelöst, dass erfindungsgemäß die Steuerungsvorrichtung als eine vorstehend beschriebene Steuerungsvorrichtung ausgebildet ist, und wobei die zumindest eine Beleuchtungsvorrichtung dazu eingerichtet ist, entsprechend Steuerbefehlen der Steuerungsvorrichtung zumindest eine modifizierte Lichthupen-Lichtverteilung, insbesondere eine modifizierte Fernlichtverteilung zu erzeugen, bei welcher modifizierten Lichthupen-Lichtverteilung, insbesondere modifizierten Fernlichtverteilung, lediglich ein oder mehrere Teilbereiche des von der Lichthupen-Lichtverteilung, insbesondere Fernlichtverteilung, beleuchtbaren Bereiches, beleuchtet werden.

Vorteilhafte Ausgestaltungen der Beleuchtungsvorrichtung sind im Folgenden angegeben, wobei diese Ausgestaltungen jede für sich alleine oder in beliebiger Kombination realisiert sein können:
- die Beleuchtungsvorrichtung umfasst zumindest ein Objekterkennungssystem, z.B. ein optisches Bilderfassungssystem, oder der Beleuchtungsvorrichtung ist zumindest ein Objekterkennungssystem, z.B. ein optisches Bilderfassungssystem, zugeordnet, und wobei die Steuerungsvorrichtung Objekt-Informationen von dem zumindest einen Objekterkennungssystem erhält, welches Objekterkennungssystem die vor der Beleuchtungsvorrichtung bzw. dem Kraftfahrzeug liegende Umgebung beobachtet, wobei die Objekt-Informationen zumindest Informationen beinhalten, -ob sich auf derselben Fahrspur, die von dem Kraftfahrzeug befahren wird, ein Fahrzeugobjekt, insbesondere ein Kraftfahrzeugobjekt, insbesondere unmittelbar, vor dem Kraftfahrzeug befindet, und vorzugsweise, in welcher Entfernung sich das Fahrzeugobjekt, insbesondere das Kraftfahrzeugobjekt befindet, und/oder wo sich auf der Fahrbahn in Fahrtrichtung gesehen von dem Kraftfahrzeug Fahrzeugobjekte, insbesondere Kraftfahrzeugobjekte befinden, und vorzugsweise in welcher Distanz zu dem Kraftfahrzeug sich diese Fahrzeugobjekte, insbesondere Kraftfahrzeugobjekte befinden;
- die Beleuchtungsvorrichtung umfasst zumindest eine Fahrbahnerkennungsvorrichtung oder der Beleuchtungsvorrichtung ist zumindest eine Fahrbahnerkennungsvorrichtung zugeordnet, mittels welcher zumindest einen Fahrbahnerkennungsvorrichtung Fahrbahn-Informationen ermittelbar und der Steuerungsvorrichtung zuführbar sind, wobei die Fahrbahn-Informationen zumindest Informationen darüber beinhalten, ob eine von dem Kraftfahrzeug befahrene Fahrbahn lediglich in eine Fahrtrichtung befahrbar ist und ob die Fahrbahn eine oder mehrere Fahrspuren aufweist, und/oder zumindest Informationen darüber beinhalten, ob eine bzw. die von dem Kraftfahrzeug befahrene Fahrbahn lediglich in eine Fahrtrichtung befahrbar ist und welche Anzahl an Fahrspuren die Fahrbahn aufweist;
- die Beleuchtungsvorrichtung ist dazu eingerichtet, die Lichthupen-Lichtverteilung, insbesondere die Fernlichtverteilung und/oder die modifizierte Lichthupen-Lichtverteilung, insbesondere die modifizierte Fernlichtverteilung, aus einzelnen Lichtsegmenten, z.B. horizontal nebeneinander und/oder vertikal übereinander liegenden Lichtsegmenten, aufzubauen;
- die Fahrbahnerkennungsvorrichtung umfasst zumindest ein optisches Bilderfassungssystem, z.B. zumindest eine Kamera oder zumindest ein Kamerasystem, und/oder zumindest ein satellitengestützten Ortungssystem, z.B. ein GPS, und/oder zumindest ein Car-to-Car-Communication System. Objekterkennungssystem und Fahrbahnerkennungsvorrichtung können getrennt aber auch gemeinsam, z.B. durch eine Kamera oder ein Kamerasystem, realisiert sein (d.h., eine Kamera/ein Kamerasystem übernimmt beide Aufgaben) bzw. eine Kamera oder ein Kamerasystem umfassen. Unterstützend bzw. ergänzend können noch andere Einrichtungen, wie GPS, Car-to-Car-Kommunikation, etc. vorgesehen sein und/oder Fahrzeugdaten, wie z.B. Fahrzeuggeschwindigkeit, Kurvenradius, etc. berücksichtigt werden.
- die Beleuchtungsvorrichtung ist als Kraftfahrzeugscheinwerfer ausgebildet.

Weiters wird die eingangs erwähnte Aufgabe mit einem eingangs erwähnten Kraftfahrzeugscheinwerfer gelöst, welcher zumindest eine solche Beleuchtungsvorrichtung umfasst.

Außerdem wird die eingangs erwähnte Aufgabe mit einem eingangs erwähnten Beleuchtungsvorrichtungssystem für ein Kraftfahrzeug gelöst, wobei das Beleuchtungsvorrichtungssystem zwei Kraftfahrzeugscheinwerfer, einen linken und einen rechten Kraftfahrzeugscheinwerfer, umfasst, und wobei erfindungsgemäß vorgesehen ist, dass zumindest ein Kraftfahrzeugscheinwerfer, vorzugsweise beide Kraftfahrzeugscheinwerfer des Beleuchtungsvorrichtungssystem, zumindest eine oben beschriebene Beleuchtungsvorrichtung nach umfasst bzw. umfassen, und wobei das Beleuchtungsvorrichtungssystem zumindest eine oben beschriebene Steuerungsvorrichtung umfasst oder dem Beleuchtungsvorrichtungssystem zumindest eine oben beschriebene Steuerungsvorrichtung zugeordnet ist, und wobei dem Beleuchtungsvorrichtungssystem zumindest ein Objekterkennungssystem zugordnet ist oder die Beleuchtungsvorrichtung zumindest ein Objekterkennungssystem umfasst, wobei die Steuerungsvorrichtung Objekt-Informationen von dem zumindest einen Objekterkennungssystem erhält, welches Objekterkennungssystem die vor der Beleuchtungsvorrichtung bzw. dem Kraftfahrzeug liegende Umgebung beobachtet, und wobei dem Beleuchtungsvorrichtungssystem zumindest eine Fahrbahnerkennungsvorrichtung zugordnet ist oder die Beleuchtungsvorrichtung zumindest eine Fahrbahnerkennungsvorrichtung umfasst, wobei die Steuerungsvorrichtung Fahrbahn-Informationen von der zumindest einen Fahrbahnerkennungsvorrichtung erhält.

Weiters wird die genannte Aufgabe noch von einem Kraftfahrzeug mit zumindest einem, insbesondere zwei Kraftfahrzeugscheinwerfern wie vorstehend beschrieben oder mit einem vorstehend beschriebenen Beleuchtungsvorrichtungssystem gelöst.

Schließlich wird die Erfindung noch mit einem eingangs erwähnten Verfahren gelöst, welches erfindungsgemäß die folgenden, vorzugsweise zumindest teilweise gleichzeitig durchgeführten, Schritte, umfasst:
*) Ermitteln von Fahrbahn-Informationen, vorzugsweise mit einer Fahrbahnerkennungsvorrichtung, welche Fahrbahn-Informationen
   - zumindest Informationen darüber beinhalten, ob eine von dem Kraftfahrzeug befahrene Fahrbahn lediglich in eine Fahrtrichtung befahrbar ist und ob die Fahrbahn eine oder mehrere Fahrspuren aufweist, und/oder
   - zumindest Informationen darüber beinhalten, ob eine bzw. die von dem Kraftfahrzeug befahrene Fahrbahn lediglich in eine Fahrtrichtung befahrbar ist und welche Anzahl an Fahrspuren die Fahrbahn aufweist,
*) Ermitteln von Objekt-Informationen, vorzugsweise mit zumindest einem Objekterkennungssystem, welches Objekterkennungssystem die vor der Beleuchtungsvorrichtung bzw. dem Kraftfahrzeug liegende Umgebung beobachtet, wobei die Objekt-Informationen zumindest Informationen beinhalten,
   - ob sich auf derselben Fahrspur, die von dem Kraftfahrzeug befahren wird, ein Fahrzeugobjekt, insbesondere ein Kraftfahrzeugobjekt, insbesondere unmittelbar, vor dem Kraftfahrzeug befindet, und vorzugsweise, in welcher Entfernung sich das Fahrzeugobjekt, insbesondere das Kraftfahrzeugobjekt befindet, und/oder
   - wo sich auf der Fahrbahn in Fahrtrichtung gesehen von dem Kraftfahrzeug Fahrzeugobjekte, insbesondere Kraftfahrzeugobjekte befinden, und vorzugsweise in welcher Distanz zu dem Kraftfahrzeug sich diese Fahrzeugobjekte, insbesondere Kraftfahrzeugobjekte befinden,
*) Auswerten der Fahrbahn-Informationen und der Objekt-Informationen, vorzugsweise mittels einer Steuerungsvorrichtung,
*) Ansteuern der zumindest einen Beleuchtungsvorrichtung oder des zumindest einen Kraftfahrzeugscheinwerfers oder von des zumindest einen Beleuchtungsvorrichtungssystems, vorzugsweise mittels einer Steuerungsvorrichtung oder der Steuerungsvorrichtung, derart, dass
*) bei einem Aktivieren einer Lichthupen-Signalisierungsfunktion eine Lichthupen-Lichtverteilung, insbesondere in Form einer Fernlichtverteilung, insbesondere für einen definierten Zeitraum, in einem Bereich vor der zumindest einen Beleuchtungsvorrichtung oder in einem Bereich vor dem Kraftfahrzeug, erzeugt wird, wobei im Falle, dass die Auswertung der Fahrbahn-Informationen und der Objekt-Informationen ergibt, dass
   - sich das Kraftfahrzeug auf einer in eine Richtung befahrbaren Fahrbahn mit zwei oder mehr Fahrspuren befindet, und
   - auf der Fahrspur des Kraftfahrzeuges, dem Kraftfahrzeug, insbesondere unmittelbar, vorausfahrend, ein Fahrzeugobjekt, insbesondere ein Kraftfahrzeugobjekt, befindet,
   eine derart modifizierte Lichthupen-Lichtverteilung, insbesondere eine derart modifizierte Fernlichtverteilung, erzeugt wird, dass im Wesentlichen lediglich das auf der Fahrspur des Kraftfahrzeuges, insbesondere unmittelbar, vorausfahrende Fahrzeugobjekt, insbesondere Kraftfahrzeugobjekt, beleuchtet wird.

Vorzugsweise werden Fahrbahn-Informationen und Objekt-Informationen permanent ermittelt und ausgewertet. Je nachdem, welches Ergebnis der Auswertung zum Zeitpunkt der Aktivierung der Lichthupen-Signalfunktion vorliegt, wird entweder die normale unmodifizierte Lichthupen-Lichtverteilung oder die modifizierte Lichthupen-Lichtverteilung eingeschaltet.

Im Folgenden ist die Erfindung an Hand der Zeichnung näher erläutert. In dieser zeigt
Fig. 1 ein erfindungsgemäßes Kraftfahrzeug in einer schematischen Draufsicht,
Fig. 2 eine beispielhafte Verkehrssituation und den Einsatz einer nach dem Stand der Technik bekannten Lichthupe,
Fig. 3 die Verkehrssituation aus Figur 2 bei Verwendung einer erfindungsgemäßen Lichthupe, und
Fig. 4 eine weitere beispielhafte Verkehrssituation bei Einsatz einer erfindungsgemäßen Lichthupe.

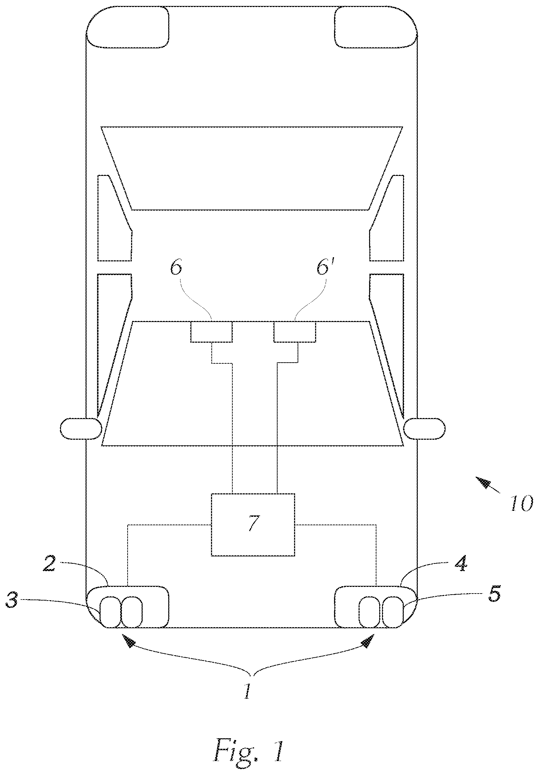

Figur 1 zeigt ein erfindungsgemäßes Kraftfahrzeug 10. Dieses Kraftfahrzeug 10 weist ein Beleuchtungsvorrichtungssystem 1 auf, welches aus zwei Kraftfahrzeugscheinwerfer 2, 4 besteht, einem linken und einem rechten Kraftfahrzeugscheinwerfer. In der gezeigten Ausführungsform verfügt jeder Scheinwerfer 2, 4 über eine Beleuchtungsvorrichtung 3, 5, z.B. in Form eines Lichtmoduls, welche Beleuchtungsvorrichtungen 3, 5 dazu eingerichtet sind, eine Lichthupen-Signalisierungsfunktion realisieren zu können. Insbesondere sind in diesem Zusammenhang die Beleuchtungsvorrichtungen 3, 5 dazu eingerichtet, eine Lichthupen-Lichtverteilung, nämlich im konkreten Beispiel eine Fernlichtverteilung zu erzeugen.

Weiters weist das Kraftfahrzeug 10 eine Steuerungsvorrichtung 7 auf, mittels welcher die Beleuchtungsvorrichtungen 3, 5, und vorzugsweise die gesamten Scheinwerfer 2, 4 angesteuert werden. Beispielsweise bei Aktivieren der Lichthupenfunktion durch den Fahrzeuglenker steuert die Steuerungsvorrichtung 7 die Beleuchtungsvorrichtungen 3, 5 derart an, dass für einen gewissen, kurzen Zeitraum die Fernlichtverteilung eingeschaltet wird, die Scheinwerfer 2, 4 also entsprechend aufblenden.

Der Steuerungsvorrichtung 7 ist ein Objekterkennungssystem 6 zugordnet, von welchem die Steuerungsvorrichtung 7 Objekt-Informationen erhält, welche das Objekterkennungssystem 6 bei einer Beobachtung der vor dem Kraftfahrzeug 10 liegenden Umgebung ermittelt.

Weiters ist der Steuerungsvorrichtung 7 eine Fahrbahnerkennungsvorrichtung 6' zugeordnet, von welcher die Steuerungsvorrichtung 7 Fahrbahn-Informationen erhält.

Das Objekterkennungssystem 6 umfasst typischerweise eine oder mehrere Kameras, welche die Umgebung beobachten, und aus dieser Beobachtung kann das Objekterkennungssystem 6 verschiedene Objekte vor dem Kraftfahrzeug 10, insbesondere aber zumindest andere Kraftfahrzeuge erkennen. Typischerweise umfasst das Objekterkennungssystem 6 wie in dem vorgestellten Beispiel eine eigene Recheneinheit, die diese Objekterkennung durchführt. Es kann aber auch vorgesehen sein, dass das Objekterkennungssystems funktional aufgeteilt ist, und die zumindest eine Kamera die aufgenommenen Bildinformationen z.B. an eine zentrale Recheneinheit oder z.B. auch an die Steuerungsvorrichtung übermittelt, wo die eigentliche Objekterkennung durchgeführt wird.

Das Objekterkennungssystem kann alternativ oder zusätzlich zu zumindest Kamera auch einen oder mehrere geeignete Sensoren, z.B. Abstandssensoren, umfassen, mit welchen sich die notwendigen Informationen ermitteln lassen.

Das Objekterkennungssystem kann alternativ oder zusätzlich zu den vorgenannten Optionen auch in einer Fahrzeug-zu-Fahrzeug-Kommunikation bestehen, über welche sich Fahrzeuge ihre Position mitteilen, oder das Objekterkennungssystem kann auch in einer Kommunikationseinrichtung mit einer zentralen Instanz, welche Informationen über Fahrzeugpositionen besitzt, und diese anderen Fahrzeugen zur Verfügung stellt, bestehen.

Weiters weist das Kraftfahrzeug 10 eine Fahrbahnerkennungsvorrichtung 6' zur Ermittlung von Fahrbahn-Informationen auf, welche z.B. ein optisches Bilderfassungssystem, z.B. zumindest eine Kamera oder zumindest ein Kamerasystem, und/oder zumindest ein satellitengestützten Ortungssystem, z.B. ein GPS, und/oder zumindest ein Car-to-Car-Communication System, umfasst. Das Fahrbahnerkennungssystem 6' kann dabei über eine eigene Kamera bzw. Kameras verfügen oder auch auf die Kamera(s) des Objekterkennungssystems 6 zurückgreifen. Unterstützend können noch Fahrzeugdaten, wie z.B. Fahrzeuggeschwindigkeit, Kurvenradius, etc. berücksichtigt werden.

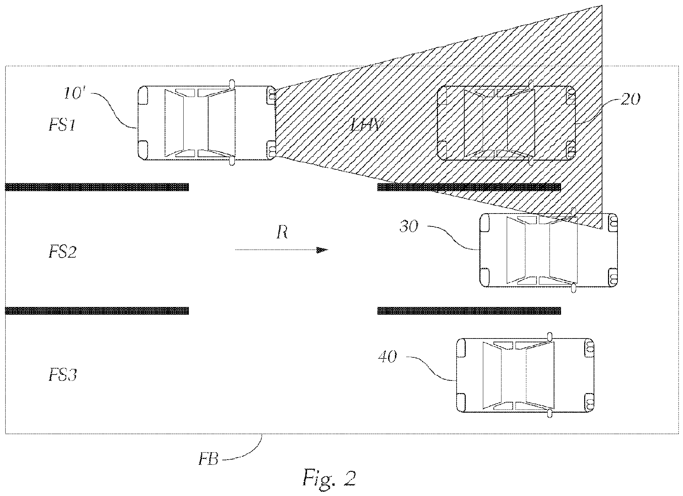

Figur 2 zeigt eine Verkehrssituation auf einer (Richtungs-)Fahrbahn FB z.B. einer Autobahn. Die Fahrbahn wird in eine Richtung R befahren und weist mehrere, in dem konkreten Beispiel drei Fahrspuren FS1, FS2, FS3 auf. In dem gezeigten Beispiel mit Rechtsverkehr ist die (rechte) Fahrspur FS3 die langsamste Fahrspur, die Fahrspuren FS2, FS1 sind die "schnelleren" Fahrspuren zum Überholen, wobei die linke Fahrspur FS1 die "schnellste" Fahrspur darstellt, auf welcher vorgesehen ist, dass Kraftfahrzeuge am schnellsten Fahren können.

In dem gezeigten Beispiel befinden sich auf allen drei Fahrspuren FS1, FS2, FS3 Kraftfahrzeuge 20, 30, 40, und von hinten nähert sich ein schnelleres Kraftfahrzeug 10'. Dieses Kraftfahrzeug 10' verfügt über Beleuchtungsvorrichtungen nach dem Stand der Technik, welche bei Aktivieren der Lichthupe eine Fernlichtverteilung erzeugen. Wie in Figur 2 dargestellt, signalisiert das Kraftfahrzeug 10' mittels der Lichthupe dem auf derselben Fahrspur FS1 vorausfahrenden Kraftfahrzeug 20, dass es überholen möchte. Dabei wird allerdings auch das Kraftfahrzeug 30, welches sich auf der benachbarten, mittleren Fahrspur FS2 befindet, von dem Fernlicht-Lichtkegel LHV erfasst, was zu einer Blendung bzw. Ablenkung des Lenkers des Kraftfahrzeuges 30 auf der mittleren Fahrspur FS2 führen kann.

Ein Kraftfahrzeug 10 gemäß der Erfindung verfügt nun über Beleuchtungsvorrichtungen 3, 5, welche dazu eingerichtet sind, bei entsprechenden Steuerbefehlen der Steuerungsvorrichtung 7 eine modifizierte Lichthupen-Lichtverteilung, d.h. eine modifizierte Fernlichtverteilung LHV' zu erzeugen, bei welcher modifizierten Fernlichtverteilung LHV' lediglich ein Teilbereich LHV' des von der (nicht modifizierten) Lichthupen-Lichtverteilung, insbesondere Fernlichtverteilung LHV, beleuchtbaren Bereiches LHV beleuchtet wird.

Besonders einfach lässt sich dies mit Beleuchtungsvorrichtungen 3, 5 realisieren, welche Lichtverteilungen, insbesondere die Fernlichtverteilung, aus einzelnen Lichtsegmenten, z.B. horizontal nebeneinander und/oder vertikal übereinander liegenden Lichtsegmenten, aufbauen, da in diesem Fall zur Erzeugung einer modifizierten Fernlichtverteilung nicht alle sondern nur eine Teilmenge aller Lichtsegmente aktiviert wird oder bei bereits aktiviertem "normalen" Fernlicht ein Teil der aktivierten Lichtsegmente abgeschaltet wird.

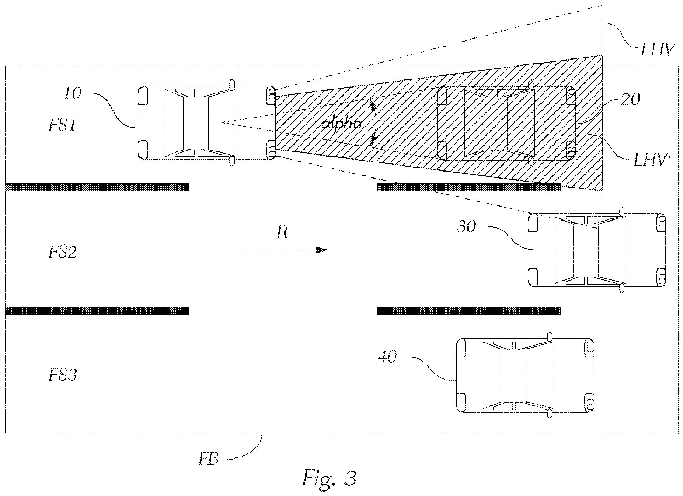

Figur 3 zeigt ein erfindungsgemäßes Kraftfahrzeug 10, welches sich in der in Zusammenhang mit Figur 2 bereits beschriebenen Situationen befindet. Die Steuerungsvorrichtung 7 erhält von der Fahrbahnerkennungsvorrichtung 6' Fahrbahn-Informationen, welche Fahrbahn-Informationen Informationen darüber beinhalten, ob die von dem Kraftfahrzeug 10 befahrene Fahrbahn FB lediglich in eine Fahrtrichtung R befahrbar ist und ob die Fahrbahn FB eine oder mehrere Fahrspuren FS1, FS2, FS3 aufweist, und/oder Informationen darüber beinhalten, ob die von dem Kraftfahrzeug 10 befahrene Fahrbahn FB lediglich in eine Fahrtrichtung R befahrbar ist und welche Anzahl an Fahrspuren FS1, FS2, FS3 die Fahrbahn FB aufweist. Vorzugsweise enthalten die Fahrbahn-Informationen auch noch Informationen darüber, auf welcher Fahrspur FS1 sich das Kraftfahrzeug 10 befindet.

Weiters erhält die Steuerungsvorrichtung 7 Objekt-Informationen von dem Objekterkennungssystem 6, wobei die Objekt-Informationen zumindest Informationen beinhalten, ob sich auf derselben Fahrspur FS1, die von dem Kraftfahrzeug 10 befahren wird, ein Fahrzeugobjekt, insbesondere ein Kraftfahrzeugobjekt bzw. Kraftfahrzeug 20 vor dem Kraftfahrzeug 10 befindet, und vorzugsweise, in welcher Entfernung sich das Kraftfahrzeug 20 befindet.

Die Steuerungsvorrichtung 7 ist nun derart eingerichtet, dass sie bei einem Aktivieren der Lichthupen-Signalisierungsfunktion im Falle, dass sich das Kraftfahrzeug 10 auf einer lediglich in eine Richtung R befahrbaren Fahrbahn FB mit zwei oder mehr Fahrspuren FS1, FS2, FS3 befindet, und auf der Fahrspur FS1 des Kraftfahrzeuges 10, dem Kraftfahrzeug 10, insbesondere unmittelbar, vorausfahrend, ein Kraftfahrzeugobjekt 20, befindet, die Beleuchtungsvorrichtungen 3, 5 oder die Kraftfahrzeugscheinwerfer 2, 4 derart angesteuert werden, dass, vorzugsweise für die definierte Zeitdauer der Lichthupen-Signalisierung, eine derart modifizierte Lichthupen-Lichtverteilung, insbesondere eine derart modifizierte Fernlichtverteilung LHV', erzeugt wird, dass im Wesentlichen lediglich das auf der Fahrspur FS1 des Kraftfahrzeuges 10, insbesondere unmittelbar, vorausfahrende Kraftfahrzeugobjekt 20, beleuchtet wird.

Genau ein solches Szenario ist in Figur 3 dargestellt, sodass bei einem Aktivieren der Lichthupe nicht die Fernlichtverteilung LHV aus Figur 2 sondern eine räumliche beschränkte Fernlichtverteilung LHV' gemäß Figur 3 erzeugt wird.

Wie dabei in Figur 3 weiters zu erkennen ist, kann vorzugsweise vorgesehen sein, dass die von dem Objekterkennungssystem 6 ermittelten Objekt-Informationen weiters einen Objekt-Winkelbereich alpha enthalten, welcher von dem auf derselben Fahrspur FS1 vorausfahrenden Kraftfahrzeugobjekt 20 eingenommen wird. Zu diesem wird ein zusätzlicher seitlicher Offset dazugerechnet, damit der beleuchtete Bereich LHV' etwas breiter ist als die Fahrzeugbreite des vorausfahrenden Kraftfahrzeugs 20.

Die Steuerungsvorrichtung 6 steuert also in dem gezeigten Fall, dass sich innerhalb eines definierten Winkelbereiches ein Kraftfahrzeug 20 befindet, bei einem Aktivieren der Lichthupen-Signalisierungsfunktion die zumindest eine, in der Regel beide Beleuchtungsvorrichtungen 3, 5 bzw. Kraftfahrzeugscheinwerfer 2, 4 derart an, dass, vorzugsweise für die definierte Zeitdauer, die modifizierte Lichthupen-Lichtverteilung, insbesondere die modifizierte Fernlichtverteilung LHV', derart erzeugt wird, dass im Wesentlichen lediglich der Objekt-Winkelbereich alpha beleuchtet wird. Unter "im Wesentlichen" bedeutet dabei, dass entweder exakt der Objekt-Winkelbereiche alpha oder ein etwas breiterer Bereich wie in Figur 3 gezeigt und oben beschrieben beleuchtet wird, derart dass Fahrzeuge 30 auf benachbarten Fahrspuren FS2 nicht beleuchtet werden.

Figur 3 zeigt den Fall, dass sich das erfindungsgemäße Kraftfahrzeug 10 auf der schnellsten Fahrspur FS1 befindet. Es kann vorgesehen sein, dass die Steuerungsvorrichtung 7 die modifizierte Lichthupen-Lichtverteilung nur aktiviert, wenn sich das Kraftfahrzeug 10 eben auf der schnellsten Fahrspur FS1 befindet. Die erfindungsgemäße räumliche Beschränkung der Fernlichtverteilung erfolgt entsprechend nur, wenn sich das Kraftfahrzeug, dessen Lichthupe aktiviert wird, auf der schnellsten Fahrspur befindet.

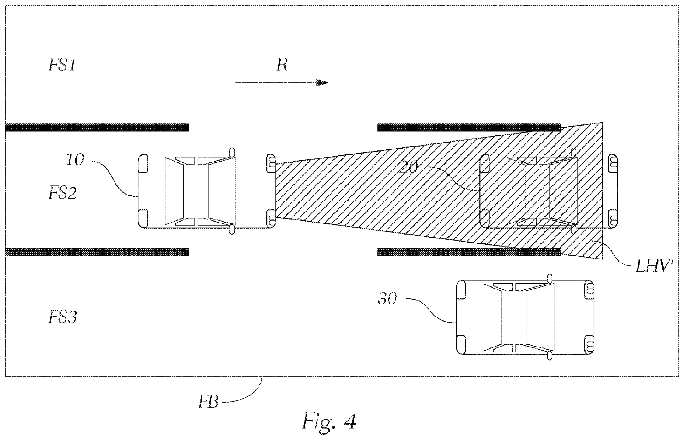

Figur 4 zeigt ein Szenario, bei welchem die Erfindung nicht auf das oben beschriebene, optionale Merkmal, dass die räumliche Beschränkung der Lichthupen-Lichtverteilung nur dann erfolgt, wenn sich das erfindungsgemäße Kraftfahrzeug 10 auf der schnellsten Spur FS1 befindet, eingeschränkt ist.

Figur 4 zeigt das Kraftfahrzeug 10 auf der mittleren Fahrspur FS2 einer Fahrbahn wie im Zusammenhang mit Figur 2 und 3 beschrieben, mit einem unmittelbar auf derselben Fahrspur FS2 vorausfahrenden Kraftfahrzeug 20. Die Steuerungsvorrichtung 7 erkennt, dass die Fahrbahn FB nur in eine Richtung R befahrbar ist, dass die Fahrbahn FB mehrere, nämlich drei, Fahrspuren FS1, FS2, FS3 aufweist, und dass unmittelbar voraus ein Kraftfahrzeug 20 fährt. Dementsprechend wird bei einem Aktivieren der Lichthupe nicht eine Fernlichtverteilung sondern eine räumliche beschränkte Fernlichtverteilung LHV' aktiviert, sodass ein Kraftfahrzeuge 30 auf der benachbarten Fahrspuren FS3 nicht von dem Lichtkegel erfasst wird.

## Patentansprüche

1. Steuerungsvorrichtung (7) zur Ansteuerung von zumindest einer Beleuchtungsvorrichtung (3, 5) für ein Kraftfahrzeug (10) oder zur Ansteuerung von zumindest einem Kraftfahrzeugscheinwerfers (2, 4), welcher zumindest eine solche Beleuchtungsvorrichtung (3, 5) aufweist,
welche zumindest eine Beleuchtungsvorrichtung (3, 5) zumindest zur Erzeugung einer Lichthupen-Signalisierungsfunktion eingerichtet ist,
wobei bei einem Aktivieren der Lichthupen-Signalisierungsfunktion die Steuerungsvorrichtung die zumindest eine Beleuchtungsvorrichtung (3, 5) oder den zumindest einen Kraftfahrzeugscheinwerfer (2, 4) derart ansteuert, dass
von der zumindest einen Beleuchtungsvorrichtung (3, 5) eine Lichthupen-Lichtverteilung, insbesondere in Form einer Fernlichtverteilung (LHV), insbesondere für einen definierten Zeitraum, in einem Bereich vor der zumindest einen Beleuchtungsvorrichtung (3, 5) oder in einem Bereich vor dem Kraftfahrzeug (10), erzeugt wird,
**dadurch gekennzeichnet, dass**
die Steuerungsvorrichtung (7) Fahrbahn-Informationen von einer Fahrbahnerkennungsvorrichtung (6, 6') erhält, welche Fahrbahn-Informationen
- zumindest Informationen darüber beinhalten, ob eine von dem Kraftfahrzeug (10) befahrene Fahrbahn (FB) lediglich in eine Fahrtrichtung (R) befahrbar ist und ob die Fahrbahn (FB) eine oder mehrere Fahrspuren (FS1, FS2, FS3) aufweist, und/oder
- zumindest Informationen darüber beinhalten, ob eine bzw. die von dem Kraftfahrzeug (10) befahrene Fahrbahn (FB) lediglich in eine Fahrtrichtung (R) befahrbar ist und welche Anzahl an Fahrspuren (FS1, FS2, FS3) die Fahrbahn (FB) aufweist,
und wobei die Steuerungsvorrichtung (7) Objekt-Informationen von zumindest einem Objekterkennungssystem (6) erhält, welches Objekterkennungssystem die vor der Beleuchtungsvorrichtung (3, 5) bzw. dem Kraftfahrzeug (10) liegende Umgebung beobachtet, wobei die Objekt-Informationen zumindest Informationen beinhalten,
- ob sich auf derselben Fahrspur (FS1), die von dem Kraftfahrzeug (10) befahren wird, ein Fahrzeugobjekt, insbesondere ein Kraftfahrzeugobjekt (20), insbesondere unmittelbar, vor dem Kraftfahrzeug (10) befindet, und vorzugsweise, in welcher Entfernung sich das Fahrzeugobjekt, insbesondere das Kraftfahrzeugobjekt (20) befindet, und/oder
- wo sich auf der Fahrbahn (FB) in Fahrtrichtung (R) gesehen von dem Kraftfahrzeug (10) Fahrzeugobjekte, insbesondere Kraftfahrzeugobjekte (20, 30, 40) befinden, und vorzugsweise in welcher Distanz (d) zu dem Kraftfahrzeug (10) sich diese Fahrzeugobjekte, insbesondere Kraftfahrzeugobjekte (20, 30, 40) befinden,
und wobei bei einem Aktivieren der Lichthupen-Signalisierungsfunktion die Steuerungsvorrichtung (7) im Falle, dass
- sich das Kraftfahrzeug (10) auf einer in eine Richtung (R) befahrbaren Fahrbahn (FB) mit zwei oder mehr Fahrspuren (FS1, FS2, FS3) befindet, und
- auf der Fahrspur (FS1) des Kraftfahrzeuges (10), dem Kraftfahrzeug (10), insbesondere unmittelbar, vorausfahrend, ein Fahrzeugobjekt, insbesondere ein Kraftfahrzeugobjekt (20), befindet,
die zumindest eine Beleuchtungsvorrichtung (3, 5), welche dazu eingerichtet ist, zumindest eine modifizierte Lichthupen-Lichtverteilung, insbesondere eine modifizierte Fernlichtverteilung (LHV') zu erzeugen, bei welcher modifizierten Lichthupen-Lichtverteilung, insbesondere modifizierten Fernlichtverteilung (LHV'), lediglich ein oder mehrere Teilbereiche (LHV') des von der Lichthupen-Lichtverteilung, insbesondere der nicht modifizierten Fernlichtverteilung (LHV), beleuchteten Bereiches (LHV), beleuchtet werden, bzw. den zumindest einen Kraftfahrzeugscheinwerfer (2, 4), derart ansteuert, dass, vorzugsweise für die definierte Zeitdauer, eine derart modifizierte Lichthupen-Lichtverteilung, insbesondere eine derart modifizierte Fernlichtverteilung (LHV'), erzeugt wird, dass im Wesentlichen lediglich das auf der Fahrspur (FS1) des Kraftfahrzeuges (10), insbesondere unmittelbar, vorausfahrende Fahrzeugobjekt, insbesondere Kraftfahrzeugobjekt (20), beleuchtet wird.

2. Steuerungsvorrichtung nach Anspruch 1, **dadurch gekennzeichnet, dass** bei einer Beleuchtungsvorrichtung, welche eine Lichthupen-Lichtverteilung, vorzugsweise eine Fernlichtverteilung (LHV), aus einzelnen Lichtsegmenten, z.B. horizontal nebeneinander und/oder vertikal übereinander liegenden Lichtsegmenten, aufbaut, die Steuerungsvorrichtung (7) die Beleuchtungsvorrichtung (3, 5) derart ansteuert, dass zur Erzeugung einer modifizierten Lichthupen-Lichtverteilung, insbesondere einer modifizierten Fernlichtverteilung (LHV), Lichtsegmente nicht erzeugt werden.

3. Steuerungsvorrichtung nach Anspruch 1 oder 2, **dadurch gekennzeichnet, dass** die von dem Objekterkennungssystem (6) ermittelten Objekt-Informationen weiters einen Objekt-Winkelbereich (alpha), welcher von einem auf derselben Fahrspur (FS1), insbesondere unmittelbar, vorausfahrenden Fahrzeugobjekt, insbesondere Kraftfahrzeugobjekt (20), eingenommen wird oder davon abhängig ist, enthalten.

4. Steuerungsvorrichtung nach einem der Ansprüche 1 bis 3, **dadurch gekennzeichnet, dass** die von dem Objekterkennungssystem (6) ermittelten Objekt-Informationen weiters eine Distanz, in welcher sich ein auf derselben Fahrspur (FS1), insbesondere unmittelbar, vorausfahrendes Fahrzeugobjekt, insbesondere Kraftfahrzeugobjekt (20), befindet, enthalten.

5. Steuerungsvorrichtung nach Anspruch 3 oder 4, **dadurch gekennzeichnet, dass** die Steuerungsvorrichtung (6) im Fall, dass sich innerhalb eines definierten Winkelbereiches ein Fahrzeug, insbesondere ein Kraftfahrzeug (20) befindet, bei einem Aktivieren der Lichthupen-Signalisierungsfunktion die zumindest eine Beleuchtungsvorrichtung (3, 5) bzw. den zumindest einen Kraftfahrzeugscheinwerfer (2, 4) derart ansteuert, dass, vorzugsweise für die definierte Zeitdauer, die modifizierte Lichthupen-Lichtverteilung, insbesondere die modifizierte Fernlichtverteilung (LHV'), derart erzeugt wird, dass im Wesentlichen lediglich der Objekt-Winkelbereich (alpha) beleuchtet wird.

6. Steuerungsvorrichtung nach einem der Ansprüche 1 bis 5, **dadurch gekennzeichnet, dass** die Steuerungsvorrichtung (7) die modifizierte Lichthupen-Lichtverteilung, vorzugsweise Fernlichtverteilung (LHV), nur aktiviert, wenn sich das auf derselben Fahrspur (FS1) unmittelbar vorausfahrende Fahrzeugobjekt, insbesondere Kraftfahrzeugobjekt (20), in einer Distanz befindet, welche kleiner ist als eine vorgebbare oder vorgegebene Mindestdistanz.

7. Steuerungsvorrichtung nach einem der Ansprüche 1 bis 6, **dadurch gekennzeichnet, dass** die Steuerungsvorrichtung (7) die modifizierte Lichthupen-Lichtverteilung, vorzugsweise Fernlichtverteilung (LHV), nur aktiviert, wenn sich das Kraftfahrzeug (10) auf der schnellsten Fahrspur (FS1) befindet.

8. Beleuchtungsvorrichtung für ein Kraftfahrzeug bzw. für einen Kraftfahrzeugscheinwerfer (2, 4), welche zumindest eine Beleuchtungsvorrichtung (3, 5) zumindest zur Erzeugung einer Lichthupen-Signalisierungsfunktion eingerichtet ist, und wobei der Beleuchtungsvorrichtung (3, 5) eine Steuerungsvorrichtung zugeordnet ist oder die Beleuchtungsvorrichtung eine Steuerungsvorrichtung umfasst, und
wobei bei einem Aktivieren der Lichthupen-Signalisierungsfunktion die Steuerungsvorrichtung die zumindest eine Beleuchtungsvorrichtung (3, 5) derart ansteuert, dass
von der zumindest einen Beleuchtungsvorrichtung (3, 5) eine Lichthupen-Lichtverteilung, insbesondere in Form einer Fernlichtverteilung (LHV), insbesondere für einen definierten Zeitraum, in einem Bereich vor der zumindest einen Beleuchtungsvorrichtung (3, 5) oder in einem Bereich vor dem Kraftfahrzeug (10), erzeugt wird,
**dadurch gekennzeichnet, dass**
die Steuerungsvorrichtung als Steuerungsvorrichtung (7) nach einem der Ansprüche 1 bis 7 ausgebildet ist, und wobei
die zumindest eine Beleuchtungsvorrichtung (3, 5) dazu eingerichtet ist, entsprechend Steuerbefehlen der Steuerungsvorrichtung (7) zumindest eine modifizierte Lichthupen-Lichtverteilung, insbesondere eine modifizierte Fernlichtverteilung (LHV') zu erzeugen, bei welcher modifizierten Lichthupen-Lichtverteilung, insbesondere modifizierten Fernlichtverteilung (LHV'), lediglich ein oder mehrere Teilbereiche (LHV') des von der Lichthupen-Lichtverteilung, insbesondere Fernlichtverteilung (LHV), beleuchtbaren Bereiches (LHV), beleuchtet werden.

9. Beleuchtungsvorrichtung nach Anspruch 8, **dadurch gekennzeichnet, dass** die Beleuchtungsvorrichtung (3, 5) zumindest ein Objekterkennungssystem (6), z.B. ein optisches Bilderfassungssystem, umfasst oder der Beleuchtungsvorrichtung (3, 5) zumindest ein Objekterkennungssystem (6), z.B. ein optisches Bilderfassungssystem, zugeordnet ist,
und wobei die Steuerungsvorrichtung (7) Objekt-Informationen von dem zumindest einen Objekterkennungssystem (6) erhält, welches Objekterkennungssystem die vor der Beleuchtungsvorrichtung (3, 5) bzw. dem Kraftfahrzeug (10) liegende Umgebung beobachtet, wobei die Objekt-Informationen zumindest Informationen beinhalten,
- ob sich auf derselben Fahrspur (FS1), die von dem Kraftfahrzeug (10) befahren wird, ein Fahrzeugobjekt, insbesondere ein Kraftfahrzeugobjekt (20), insbesondere unmittelbar, vor dem Kraftfahrzeug (10) befindet, und vorzugsweise, in welcher Entfernung sich das Fahrzeugobjekt, insbesondere das Kraftfahrzeugobjekt (20) befindet, und/oder
- wo sich auf der Fahrbahn (FB) in Fahrtrichtung (R) gesehen von dem Kraftfahrzeug (10) Fahrzeugobjekte, insbesondere Kraftfahrzeugobjekte (20, 30, 40) befinden, und vorzugsweise in welcher Distanz zu dem Kraftfahrzeug (10) sich diese Fahrzeugobjekte, insbesondere Kraftfahrzeugobjekte (20, 30, 40) befinden.

10. Beleuchtungsvorrichtung nach Anspruch 8 oder 9, **dadurch gekennzeichnet, dass** die Beleuchtungsvorrichtung (3, 5) zumindest eine Fahrbahnerkennungsvorrichtung (6, 6') umfasst oder der Beleuchtungsvorrichtung (3, 5) zumindest eine Fahrbahnerkennungsvorrichtung (6, 6') zugeordnet ist, mittels welcher zumindest einen Fahrbahnerkennungsvorrichtung (6, 6') Fahrbahn-Informationen ermittelbar und der Steuerungsvorrichtung (7) zuführbar sind, wobei die Fahrbahn-Informationen
- zumindest Informationen darüber beinhalten, ob eine von dem Kraftfahrzeug (10) befahrene Fahrbahn (FB) lediglich in eine Fahrtrichtung (R) befahrbar ist und ob die Fahrbahn (FB) eine oder mehrere Fahrspuren (FS1, FS2, FS3) aufweist, und/oder
- zumindest Informationen darüber beinhalten, ob eine bzw. die von dem Kraftfahrzeug (10) befahrene Fahrbahn (FB) lediglich in eine Fahrtrichtung (R) befahrbar ist und welche Anzahl an Fahrspuren (FS1, FS2, FS3) die Fahrbahn (FB) aufweist.

11. Beleuchtungsvorrichtung nach einem der Ansprüche 8 bis 10, **dadurch gekennzeichnet, dass** die Beleuchtungsvorrichtung (3, 5) dazu eingerichtet ist, die Lichthupen-Lichtverteilung, insbesondere die Fernlichtverteilung (LHV) und/oder die modifizierte Lichthupen-Lichtverteilung, insbesondere die modifizierte Fernlichtverteilung (LHV'), aus einzelnen Lichtsegmenten, z.B. horizontal nebeneinander und/oder vertikal übereinander liegenden Lichtsegmenten, aufzubauen.

12. Beleuchtungsvorrichtung nach einem der Ansprüche 8 bis 11, **dadurch gekennzeichnet, dass** die Fahrbahnerkennungsvorrichtung zumindest ein optisches Bilderfassungssystem, z.B. zumindest eine Kamera oder zumindest ein Kamerasystem, und/oder zumindest ein satellitengestützten Ortungssystem, z.B. ein GPS, und/oder zumindest ein Car-to-Car-Communication System umfasst.

13. Beleuchtungsvorrichtung nach einem der Ansprüche 8 bis 12, **dadurch gekennzeichnet, dass** die Beleuchtungsvorrichtung als Kraftfahrzeugscheinwerfer ausgebildet ist.

14. Kraftfahrzeugscheinwerfer, welcher zumindest eine Beleuchtungsvorrichtung nach einem der Ansprüche 8 bis 12 umfasst.

15. Beleuchtungsvorrichtungssystem (1) für ein Kraftfahrzeug (10), wobei das Beleuchtungsvorrichtungssystem (1) zwei Kraftfahrzeugscheinwerfer (2, 4), einen linken und einen rechten Kraftfahrzeugscheinwerfer, umfasst,
**dadurch gekennzeichnet, dass**
zumindest ein Kraftfahrzeugscheinwerfer, vorzugsweise beiden Kraftfahrzeugscheinwerfer (2, 4) des Beleuchtungsvorrichtungssystem, zumindest eine Beleuchtungsvorrichtung (3, 5) nach einem der Ansprüche 8 bis 13 umfasst bzw. umfassen, und
wobei das Beleuchtungsvorrichtungssystem (1) zumindest eine Steuerungsvorrichtung (7) nach einem der Ansprüche 1 bis 7 umfasst oder dem Beleuchtungsvorrichtungssystem zumindest eine Steuerungsvorrichtung nach einem der Ansprüche 1 bis 7 zugeordnet ist,
und wobei dem Beleuchtungsvorrichtungssystem (1) zumindest ein
Objekterkennungssystem (6) zugordnet ist oder die Beleuchtungsvorrichtung (3, 5) zumindest ein Objekterkennungssystem (6) umfasst, wobei die Steuerungsvorrichtung (7) Objekt-Informationen von dem zumindest einen Objekterkennungssystem (6) erhält, welches Objekterkennungssystem die vor der Beleuchtungsvorrichtung (3, 5) bzw. dem Kraftfahrzeug (10) liegende Umgebung beobachtet,
und wobei
dem Beleuchtungsvorrichtungssystem (1) zumindest eine Fahrbahnerkennungsvorrichtung (6, 6') zugordnet ist oder die Beleuchtungsvorrichtung (7) zumindest eine Fahrbahnerkennungsvorrichtung (6, 6') umfasst, wobei die Steuerungsvorrichtung (7) Fahrbahn-Informationen von der zumindest einen Fahrbahnerkennungsvorrichtung (6, 6') erhält.

16. Kraftfahrzeug (10) mit zumindest einem, insbesondere zwei Kraftfahrzeugscheinwerfern (2, 4) nach Anspruch 14 oder mit einem Beleuchtungsvorrichtungssystem (1) nach Anspruch 15.

17. Verfahren zum Ansteuern von zumindest einer Beleuchtungsvorrichtung (3, 5) nach einem der Ansprüche 8 bis 13 oder von zumindest einem Kraftfahrzeugscheinwerfer nach Anspruch 14 oder von zumindest einer Beleuchtungsvorrichtungssystems (1) nach Anspruch 15,
**gekennzeichnet durch** die folgenden, vorzugsweise zumindest teilweise gleichzeitig durchgeführten, Schritte:
*) Ermitteln von Fahrbahn-Informationen, vorzugsweise mit einer Fahrbahnerkennungsvorrichtung (6, 6'), welche Fahrbahn-Informationen
- zumindest Informationen darüber beinhalten, ob eine von dem Kraftfahrzeug (10) befahrene Fahrbahn (FB) lediglich in eine Fahrtrichtung (R) befahrbar ist und ob die Fahrbahn (FB) eine oder mehrere Fahrspuren (FS1, FS2, FS3) aufweist, und/oder
- zumindest Informationen darüber beinhalten, ob eine bzw. die von dem Kraftfahrzeug (10) befahrene Fahrbahn (FB) lediglich in eine Fahrtrichtung (R) befahrbar ist und welche Anzahl an Fahrspuren (FS1, FS2, FS3) die Fahrbahn (FB) aufweist,
*) Ermitteln von Objekt-Informationen, vorzugsweise mit zumindest einem Objekterkennungssystem (6), welches Objekterkennungssystem die vor der Beleuchtungsvorrichtung (3, 5) bzw. dem Kraftfahrzeug (10) liegende Umgebung beobachtet, wobei die Objekt-Informationen zumindest Informationen beinhalten,
- ob sich auf derselben Fahrspur (FS1), die von dem Kraftfahrzeug (10) befahren wird, ein Fahrzeugobjekt, insbesondere ein Kraftfahrzeugobjekt (20), insbesondere unmittelbar, vor dem Kraftfahrzeug (10) befindet, und vorzugsweise, in welcher Entfernung sich das Fahrzeugobjekt, insbesondere das Kraftfahrzeugobjekt (20) befindet, und/oder
- wo sich auf der Fahrbahn (FB) in Fahrtrichtung (R) gesehen von dem Kraftfahrzeug (10) Fahrzeugobjekte, insbesondere Kraftfahrzeugobjekte (20, 30, 40) befinden, und vorzugsweise in welcher Distanz zu dem Kraftfahrzeug (10) sich diese Fahrzeugobjekte, insbesondere Kraftfahrzeugobjekte (20, 30, 40) befinden,
*) Auswerten der Fahrbahn-Informationen und der Objekt-Informationen, vorzugsweise mittels einer Steuerungsvorrichtung (7),
*) Ansteuern der zumindest einen Beleuchtungsvorrichtung oder des zumindest einen Kraftfahrzeugscheinwerfers oder von des zumindest einen Beleuchtungsvorrichtungssystems (1), vorzugsweise mittels einer Steuerungsvorrichtung (7) oder der Steuerungsvorrichtung (7), derart, dass
*) bei einem Aktivieren einer Lichthupen-Signalisierungsfunktion eine Lichthupen-Lichtverteilung, insbesondere in Form einer Fernlichtverteilung (LHV), insbesondere für einen definierten Zeitraum, in einem Bereich vor der zumindest einen Beleuchtungsvorrichtung (3, 5) oder in einem Bereich vor dem Kraftfahrzeug (10), erzeugt wird, wobei im Falle, dass die Auswertung der Fahrbahn-Informationen und der Objekt-Informationen ergibt, dass
- sich das Kraftfahrzeug (10) auf einer in eine Richtung (R) befahrbaren Fahrbahn (FB) mit zwei oder mehr Fahrspuren (FS1, FS2, FS3) befindet, und
- auf der Fahrspur (FS1) des Kraftfahrzeuges (10), dem Kraftfahrzeug (10), insbesondere unmittelbar, vorausfahrend, ein Fahrzeugobjekt, insbesondere ein Kraftfahrzeugobjekt (20), befindet,
eine derart modifizierte Lichthupen-Lichtverteilung, insbesondere eine derart modifizierte Fernlichtverteilung (LHV'), erzeugt wird, dass im Wesentlichen lediglich das auf der Fahrspur (FS1) des Kraftfahrzeuges (10), insbesondere unmittelbar, vorausfahrende Fahrzeugobjekt, insbesondere Kraftfahrzeugobjekt (20), beleuchtet wird.

## Claims

1. A controller device (7) for actuating at least one lighting device (3, 5) for a motor vehicle (10) or for actuating at least one motor vehicle headlight (2, 4) having at least one such lighting device (3, 5), said at least one lighting device (3, 5) being designed for generating a flasher signalling function, wherein, upon activation of the flasher signalling function, the controller device actuates the at least one lighting device (3, 5) or the at least one motor vehicle headlight (2, 4) such that a flasher light distribution, in particular in the form of a high-beam distribution (LHV), is generated by the at least one lighting device (3, 5), in particular generated for a defined period of time, in a region in front of the at least one lighting device (3, 5) or in a region in front of the motor vehicle (10), **characterised in that** the controller device (7) receives roadway information from a roadway detection device (6, 6'), said roadway information
- including, at a minimum, information regarding whether a roadway (FB) on which the motor vehicle (10) is traveling can be traversed in only one direction (R) and whether the roadway (FB) comprises one or more lanes (FS1, FS2, FS3), and/or
- including, at a minimum, information regarding whether a roadway (FB), that is the roadway (FB) on which the motor vehicle (10) is traveling, can be traversed in only one direction (R) and how many lanes (FS1, FS2, FS3) the roadway (FB) has,
and wherein the controller device (7) receives object information from at least one object detection system (6), said object detection system monitoring the environment in front of the lighting device (3, 5) and/or in front of the motor vehicle (10), wherein the object information at a minimum contains information regarding
- whether a vehicle object, in particular a motor vehicle object (20), is present in the same lane (FS1), on which the motor vehicle (10) is traveling, in particular whether said motor vehicle object (20) is present immediately in front of the motor vehicle (10), and preferably at which distance the vehicle object, in particular the motor vehicle object (20) is located, and/or
- where on the roadway (FB), as seen in the travelling direction (R) of the motor vehicle (10), vehicle objects, in particular motor vehicle objects (20, 30, 40), are located, and preferably at which distance (d) from the motor vehicle (10) these vehicle objects, in particular these motor vehicle objects (20, 30, 40), are located,
and wherein, upon activation of the flasher signalling function, the controller device (7), in the case that
- the motor vehicle (10) is located on a roadway which can be traversed in only one direction (R) and which comprises two or more lanes (FS1, FS2, FS3), and
- a vehicle object, in particular a motor vehicle object (20), is travelling in the same lane (FS1) in which the motor vehicle (10) is located, in particular travelling immediately in front of the motor vehicle (10),
actuates the at least one lighting device (3, 5), which is designed to generate at least one modified flasher light distribution, in particular a modified high-beam distribution (LHV'), said modified flasher light distribution, in particular modified high-beam distribution (LHV'), illuminating only one or more sub-regions (LHV') of the region (LHV) which can be illuminated by the flasher light distribution, in particular by the unmodified high-beam distribution (LHV), or actuates the at least one motor vehicle headlight (2, 4), such that a flasher light distribution, in particular a high-beam distribution (LHV'), is generated in such a modified manner that essentially only the vehicle object, in particular motor vehicle object (20), travelling in front of the motor vehicle (10) in the same lane (FS1), in particular travelling immediately in front of the motor vehicle (10), is illuminated.

2. The controller device according to Claim 1, **characterised in that,** in a lighting device, which forms a flasher light distribution, preferably a high-beam distribution (LHV), from individual light segments, e.g. light segments positioned adjacent to each other horizontally or on top of each other vertically, the controller device (7) actuates the lighting device (3, 5) in such a manner that light segments are not generated for generating a modified flasher light distribution, in particular a modified high-beam distribution (LHV).

3. The controller device according to Claim 1 or 2, **characterised in that** the object information detected by the object detection system (6) furthermore contains an object angle range (alpha) taken up by or dependent on a vehicle object, in particular motor vehicle object (20), travelling ahead in the same lane (FS1), in particular travelling immediately ahead.

4. The controller device according to any one of Claims 1 to 3, **characterised in that** the object information detected by the object detection system (6) furthermore contains a distance at which a vehicle object, in particular motor vehicle object (20), travelling ahead in the same lane (FS1), in particular travelling immediately ahead, is located.

5. The controller device according to Claim 3 or 4, **characterised in that,** in the case that a vehicle, in particular a motor vehicle (20), is present within a defined angle range, the controller device (6), upon activation of the flasher signalling function, actuates the at least one lighting device (3, 5) or the at least one motor vehicle headlight (2, 4) in such a manner that the modified flasher light distribution, in particular the modified high-beam distribution (LHV'), is generated, preferably for the defined period of time, such that essentially only the object angle range (alpha) is illuminated.

6. The controller device according to any one of Claims 1 to 5, **characterised in that** the controller device (7) only activates the modified flasher light distribution, preferably high-beam distribution (LHV), when the vehicle object, in particular motor vehicle object (20), travelling immediately ahead in the same lane (FS1) is located at a distance which is shorter than a definable or defined minimum distance.

7. The controller device according to any one of Claims 1 to 6, **characterised in that** the controller device (7) only activates the modified flasher light distribution, preferably high-beam distribution (LHV), when the motor vehicle object (10) is located in the fastest lane (FS1).

8. A lighting device for a motor vehicle (10) or for a motor vehicle headlight (2, 4), said at least one lighting device (3, 5) being designed for generating at a minimum a flasher signalling function and wherein a controller device is associated with the lighting device (3, 5) or wherein the lighting device comprises a controller device, and wherein, upon activation of the flasher signalling function, the controller device actuates the at least one lighting device (3, 5) such that a flasher light distribution, in particular in the form of a high-beam distribution (LHV), is generated by the at least one lighting device (3, 5), in particular for a defined period of time, in a region in front of the at least one lighting device (3, 5) or in a region in front of the motor vehicle (10), **characterised in that** the controller device is designed as a controller device (7) according to any one of the Claims **1 to 7,** and wherein the at least one lighting device (3, 5) is configured to generate at least one modified flasher light distribution, in particular a modified high-beam distribution (LHV') according to control commands from the controller device (7), wherein only one or more sub-regions (LHV') of the region (LHV) which can be illuminated by the flasher light distribution, in particular by the high-beam distribution (LHV), are illuminated with the modified flasher light distribution, in particular modified high-beam distribution (LHV').

9. The lighting device according to Claim 8, **characterised in that** the lighting device (3, 5) comprises at least one object detection system (6), e.g. an optical image capturing system, or that at least one object detection system (6), e.g. an optical image capturing system, is associated with the lighting device (3, 5), and wherein the controller device (7) receives object information from the at least one object detection device (6), said object detection system monitoring the environment located in front of the lighting device (3, 5) or in front of the motor vehicle (10), wherein the object information contains at a minimum information regarding
- whether a vehicle object, in particular a motor vehicle object (20), is present in the same lane (FS1), on which the motor vehicle (10) is traveling, in particular whether said motor vehicle object (20) is present immediately in front of the motor vehicle (10), and preferably at which distance the vehicle object, in particular the motor vehicle object (20) is located, and/or
- where on the roadway (FB), as seen in the travelling direction (R) of the motor vehicle (10), vehicle objects, in particular motor vehicle objects (20, 30, 40), are located, and preferably at which distance from the motor vehicle (10) these vehicle objects, in particular these motor vehicle objects (20, 30, 40), are located.

10. The lighting device according to Claim 8 or 9, **characterised in that** the lighting device (3, 5) comprises at least one roadway detection device (6, 6'), or that at least one roadway detection device (6, 6') is associated with the lighting device (3, 5), said at least one roadway detection device (6, 6') being able to detect roadway information and able to transfer said roadway information to the controller device (7), wherein the roadway information
- at a minimum includes information regarding whether a roadway (FB) on which the motor vehicle (10) is traveling can be traversed in only one direction (R) and whether the roadway (FB) comprises one or more lanes (FS1, FS2, FS3), and/or
- at a minimum includes information regarding whether a roadway (FB), that is the roadway (FB) on which the motor vehicle (10) is traveling, can be traversed in only one direction (R) and how many lanes (FS1, FS2, FS3) the roadway (FB) has.

11. The lighting device according to any one of Claims 8 to 10, **characterised in that** the lighting device (3, 5) is designed to form a flasher light distribution, in particular the high-beam distribution (LHV) and/or the modified flasher light distribution, in particular the modified high-beam distribution (LHV'), from individual light segments, e.g. light segments positioned adjacent to each other horizontally or on top of each other vertically.

12. The lighting device according to any one of Claims 8 to 11, **characterised in that** the roadway detection device comprises at least one optical image capturing system, e.g. at least one camera or at least one camera system, and/or at least one satellite-based positioning system, e.g. a GPS, and/or at least one car-to-car communication system.

13. The lighting device according to any one of Claims 8 to 11, **characterised in that** the lighting device is designed as a motor vehicle headlight.

14. A motor vehicle headlight, which comprises at least one lighting device according to any one of Claims 8 to 12.

15. A lighting device system (1) for a motor vehicle (10), wherein the lighting device system (1) comprises two motor vehicle headlights (2, 4), specifically a left and a right motor vehicle headlight, **characterised in that** at least one motor vehicle headlight, preferably both motor vehicle headlights (2, 4) of the lighting device system, comprise(s) at least one lighting device (3, 5) according to any one of Claims 8 to 13, and wherein the lighting device system (1) comprises at least one controller system (7) according to any one of Claims 1 to 7 or that at least one controller system according to any one of Claims 1 to 7 is associated with the lighting device system, and wherein at least one object detection system (6) is associated with the lighting device system (1) or the lighting device (3, 5) comprises at least one object detection system (6), wherein the controller device (7) receives object information from the at least one object detection system (6), said object detection system monitoring the environment located in front of the lighting device (3, 5) or in front of the motor vehicle (10), and wherein at least one roadway detection device (6, 6') is associated with the lighting device system (1) or the lighting device (7) comprises at least one roadway detection device (6, 6'), wherein the controller device (7) receives roadway information from the at least one roadway detection device (6, 6').

16. A motor vehicle (10) with at least one, in particular with two, motor vehicle headlights (2, 4) according to Claim 14 or with a lighting device system (1) according to Claim 15.

17. A method for actuating at least one lighting device (3, 5) according to any one of Claims 8 to 13 or at least one motor vehicle headlight according to Claim 14 or at least one lighting device system (1) according to Claim 15, **characterised by** the following steps, which preferably are at least partially executed simultaneously:
*) Determining roadway information, preferably with a roadway detection device (6, 6'), said roadway information
- at a minimum including information regarding whether a roadway (FB) on which the motor vehicle (10) is traveling can be traversed in only one direction (R) and whether the roadway (FB) comprises one or more lanes (FS1, FS2, FS3), and/or
- at a minimum including information regarding whether a roadway (FB), that is the roadway (FB) on which the motor vehicle (10) is traveling, can be traversed in only one direction (R) and how many lanes (FS1, FS2, FS3) the roadway (FB) has;
*) Determining object information, preferably with at least one object detection system (6), said object detection system monitoring the environment in front of the lighting device (3, 5) and/or in front of the motor vehicle (10), wherein the object information at a minimum contains information regarding
- whether a vehicle object, in particular a motor vehicle object (20), is present in the same lane (FS1), on which the motor vehicle (10) is traveling, in particular whether said motor vehicle object (20) is present immediately in front of the motor vehicle (10), and preferably at which distance the vehicle object, in particular the motor vehicle object (20), is located, and/or
- where on the roadway (FB), as seen in the travelling direction (R) of the motor vehicle (10), vehicle objects, in particular motor vehicle objects (20, 30, 40), are located, and preferably at which distance from the motor vehicle (10) these vehicle objects, in particular these motor vehicle objects (20, 30, 40), are located;
*) Analysing the roadway information and the object information, preferably by means of a controller device (7);
*) Actuating the at least one lighting device or the at least one motor vehicle headlight or the at least one lighting device system (1), preferably by means of a controller device (7), or the controller device (7), in such a manner that,
*) upon activation of the flasher signalling function, a flasher light distribution, in particular in the form of a high-beam distribution (LHV), is generated, in particular generated for a defined period of time, in a region in front of the at least one lighting device (3, 5) or in a region in front of the motor vehicle (10), wherein, in the case that the analysis of the roadway information and the object information shows that
- the motor vehicle (10) is located on a roadway (FB) which can be traversed in only one direction (R) and which comprises two or more lanes (FS1, FS2, FS3), and
- a vehicle object, in particular a motor vehicle object (20), is travelling in the same lane (FS1) in which the motor vehicle (10) is located, in particular travelling immediately in front of the motor vehicle (10),
a flasher light distribution, in particular a high-beam distribution (LHV'), is generated in such a modified manner that essentially only the vehicle object, in particular motor vehicle object (20), travelling in front of the motor vehicle (10) in the same lane (FS1), in particular travelling immediately in front of the motor vehicle (10), is illuminated.

## Revendications

1. Dispositif de commande (7), destiné à actionner au moins un dispositif d'éclairage (3, 5) pour un véhicule automobile (10) ou à actionner au moins un phare de véhicule automobile (2, 4), lequel comporte au moins un tel dispositif d'éclairage (3, 5),
lequel au moins un dispositif d'éclairage (3, 5) est aménagé pour réaliser au moins une fonction de signalisation par avertisseur lumineux,
lors d'une activation de la fonction de signalisation par avertisseur lumineux, le dispositif de commande actionnant l'au moins un dispositif d'éclairage (3, 5) ou l'au moins un phare de véhicule automobile (2, 4), de telle sorte que
par l'au moins un dispositif d'éclairage (3, 5) soit générée une distribution de lumière de signalisation lumineuse, notamment sous la forme d'une distribution de feu de route (LHV), notamment pour une période définie, dans une zone de l'au moins un dispositif d'éclairage (3, 5) ou dans une zone à l'avant du véhicule automobile (10),
**caractérisé en ce que**
le dispositif de commande (7) obtient des informations sur la route de la part d'un dispositif de reconnaissance de la route (6, 6'), lesquelles informations sur la route
- contiennent au moins des informations sur le fait si une route (FB) empruntée par le véhicule automobile (10) est praticable uniquement dans un sens de circulation (R) et si la route (FB) comporte une ou plusieurs voies de circulation (FS1, FS2, FS3), et/ou
- contiennent au moins des informations sur le fait si une ou la route (FB) empruntée par le véhicule automobile (10) est praticable dans le sens de circulation (R) et le nombre de voies de circulation (FS1, FS2, FS3) que comporte la route (FB),
et le dispositif de commande (7) recevant des informations sur un objet de la part d'un système de reconnaissance d'objets (6), lequel système de reconnaissance d'objets observe l'environnement situé à l'avant du dispositif d'éclairage (3, 5) ou du véhicule automobile (10), les informations sur un objet contenant au moins des informations
- sur le fait si sur cette même voie de circulation (FS1) qui est empruntée par le véhicule automobile (10) se trouve un objet véhicule, notamment un objet véhicule automobile (20), notamment directement à l'avant du véhicule automobile (10) et de préférence à quel éloignement se trouve l'objet véhicule, notamment l'objet véhicule automobile (20) et/ ou
- à quel endroit sur la route (FB), vu dans le sens de circulation (R) se trouvent à l'avant du véhicule automobile (10) des objets véhicules, notamment des objets véhicules automobiles (20, 30, 40) et de préférence à quelle distance (d) du véhicule automobile (10) se trouvent ces objets véhicules, notamment des objets véhicules automobiles (20, 30, 40),
et lors d'une activation de la fonction de signalisation par avertisseur lumineux, le dispositif de commande (7) s'éclairant au cas où
- le véhicule automobile (10) se trouve sur une route (FB) praticable dans une direction (R), comprenant deux voies de circulation (FS1, FS2, FS3) ou plus, et
- sur la voie de circulation (FS1) du véhicule automobile (10), se trouve en précédant, notamment directement le véhicule automobile (10) un objet véhicule, notamment un objet véhicule automobile (20),
l'au moins un dispositif d'éclairage (3, 5), lequel est aménagé pour générer au moins une distribution de lumière de signalisation lumineuse modifiée, notamment une distribution de feu de route (LHV') modifiée, par laquelle distribution de lumière de signalisation lumineuse modifiée, notamment distribution de feu de route (LHV'), modifiée une seule ou plusieurs zones partielles (LHV') de la zone (LHV) éclairée par la distribution de lumière de signalisation lumineuse, notamment de la distribution de feu de route (LHV) non modifiée sont éclairées, actionnant l'au moins un phare de véhicule automobile (2, 4) de telle sorte que de préférence pour la période définie, une distribution de lumière de signalisation lumineuse modifiée de la sorte, notamment une distribution de feu de route (LHV') modifiée de la sorte soit générée, de manière que sensiblement seul l'objet véhicule, notamment l'objet véhicule automobile (20) précédent, notamment directement sur la voie de circulation (FS1) du véhicule automobile (10), soit éclairé.

2. Dispositif de commande selon la revendication 1, **caractérisé en ce que** sur un dispositif d'éclairage, lequel établit une distribution de lumière de signalisation lumineuse, de préférence une distribution de feu de route (LHV) à partir de segments lumineux individuels, par exemple de segments lumineux placés côte à côte à l'horizontale et/ou superposés à la verticale, le dispositif de commande (7) actionne le dispositif d'éclairage (3, 5) de telle manière que pour générer une distribution de lumière de signalisation lumineuse modifiée, notamment une distribution de feu de route (LHV) modifiée, des segments de lumière ne soient pas générés.

3. Dispositif de commande selon la revendication 1 ou 2, **caractérisé en ce que** les informations sur un objet déterminées par le système de reconnaissance d'objets (6) contiennent en outre une plage angulaire d'un objet (alpha) qui est adoptée par un objet véhicule, notamment un objet véhicule automobile (20) précédent, notamment directement sur la même voie de circulation (FS1) ou qui en dépend.

4. Dispositif de commande selon l'une quelconque des revendications 1 à 3, **caractérisé en ce que** les informations sur un objet déterminées par le système de reconnaissance d'objets (6) contiennent en outre une distance à laquelle se trouve un objet véhicule, notamment un objet véhicule automobile (20) précédent, notamment directement sur la même voie de circulation (FS1) .

5. Dispositif de commande selon la revendication 3 ou 4, **caractérisé en ce que** dans le cas où un véhicule, notamment un véhicule automobile (20) se trouve à l'intérieur d'une plage angulaire définie, lors d'une activation de la fonction de signalisation par avertisseur lumineux, le dispositif de commande (6) actionne l'au moins un dispositif d'éclairage (3, 5) ou l'au moins un phare de véhicule automobile (2, 4) de telle manière que de préférence pour la période définie, la distribution de lumière de signalisation lumineuse modifiée, notamment la distribution de feu de route (LHV') modifiée soit générée de telle sorte que sensiblement seule la plage angulaire d'un objet (alpha) soit éclairée.

6. Dispositif de commande selon l'une quelconque des revendications 1 à 5, **caractérisé en ce que** le dispositif de commande (7) n'active la distribution de lumière de signalisation lumineuse modifiée, de préférence la distribution de feu de route (LHV) que si l'objet véhicule, notamment l'objet véhicule automobile (20) directement précédent sur la même voie de circulation (FS1) se trouve à une distance qui est inférieure à une distance minimale prédéfinissable ou prédéfinie.

7. Dispositif de commande selon l'une quelconque des revendications 1 à 6, **caractérisé en ce que** le dispositif de commande (7) n'active la distribution de lumière de signalisation lumineuse modifiée, de préférence la distribution de feu de route (LHV) modifiée que si le véhicule automobile (10) se trouve sur la voie de circulation (FS1) la plus rapide.

8. Dispositif d'éclairage destiné à un véhicule automobile ou à un phare de véhicule automobile (2, 4), lequel au moins un dispositif d'éclairage (3, 5) est aménagé au moins pour réaliser une fonction de signalisation par avertisseur lumineux et au dispositif d'éclairage (3, 5) étant associé un dispositif de commande ou le dispositif d'éclairage comprenant un dispositif de commande, et
lors d'une activation de la fonction de signalisation par avertisseur lumineux, le dispositif de commande actionnant l'au moins un dispositif d'éclairage (3, 5) de telle manière que
par l'au moins un dispositif d'éclairage (3, 5) soit générée une distribution de lumière de signalisation lumineuse, notamment sous la forme d'une distribution de feu de route (LHV), notamment pour une période définie, dans une zone de l'au moins un dispositif d'éclairage (3, 5) ou dans une zone à l'avant du véhicule automobile (10),
**caractérisé en ce que**
le dispositif de commande est conçu sous la forme d'un dispositif de commande (7) selon l'une quelconque des revendications 1 à 7
et
l'au moins un dispositif d'éclairage (3, 5) étant aménagé pour, en fonction d'instructions de commande du dispositif de commande (7), générer au moins une distribution de lumière de signalisation lumineuse modifiée, notamment une distribution de feu de route (LHV') modifiée, avec laquelle distribution de lumière de signalisation lumineuse modifiée, notamment distribution de feu de route (LHV') modifiée, une seule ou plusieurs zones partielles (LHV') de la zone (LHV) éclairée pat la distribution de lumière de signalisation lumineuse, notamment la distribution de feu de route (LHV) sont éclairées.

9. Dispositif d'éclairage selon la revendication 8, **caractérisé en ce que** le dispositif d'éclairage (3, 5) comprend au moins un système de reconnaissance d'objets (6), par exemple un système d'imagerie optique, ou **en ce qu'**au dispositif d'éclairage (3, 5) est associé au moins un système de reconnaissance d'objets (6), par exemple un système d'imagerie optique,
et le dispositif de commande (7) obtenant des informations sur un objet de la part d'au moins un système de reconnaissance d'objets (6), lequel système de reconnaissance d'objets observe l'environnement situé à l'avant du dispositif d'éclairage (3, 5) ou du véhicule automobile (10), les informations sur un objet contenant au moins des informations,
- sur le fait si sur cette même voie de circulation (FS1) qui est empruntée par le véhicule automobile (10) se trouve un objet véhicule, notamment un objet véhicule automobile (20), notamment directement à l'avant du véhicule automobile (10) et de préférence à quel éloignement se trouve l'objet véhicule, notamment l'objet véhicule automobile (20) et/ ou
- à quel endroit sur la route (FB), vu dans le sens de circulation (R) se trouvent à l'avant du véhicule automobile (10) des objets véhicules, notamment des objets véhicules automobiles (20, 30, 40) et de préférence à quelle distance (d) du véhicule automobile (10) se trouvent ces objets véhicules, notamment des objets véhicules automobiles (20, 30, 40).

10. Dispositif d'éclairage selon la revendication 8 ou 9, **caractérisé en ce que** le dispositif d'éclairage (3, 5) comprend au moins un dispositif de reconnaissance de la route (6, 6') ou au dispositif d'éclairage (3, 5) est associé au moins un dispositif de reconnaissance de la route (6, 6') à l'aide de l'au moins un dispositif de reconnaissance de la route (6, 6') des informations sur la route étant susceptibles d'être déterminées et amenées au dispositif de commande (7), les informations sur la route
- contenant au moins des informations sur le fait si une route (FB) empruntée par le véhicule automobile (10) est praticable uniquement dans un sens de circulation (R) et si la route (FB) comporte une ou plusieurs voies de circulation (FS1, FS2, FS3), et/ou
- contenant au moins des informations sur le fait si une ou la route (FB) empruntée par le véhicule automobile (10) est praticable dans le sens de circulation (R) et le nombre de voies de circulation (FS1, FS2, FS3) que comporte la route (FB) .

11. Dispositif d'éclairage selon l'une quelconque des revendications 8 à 10, **caractérisé en ce que** le dispositif d'éclairage (3, 5) est aménagé pour établir la distribution de lumière de signalisation lumineuse, notamment de distribution de feu de route (LHV) et/ou la distribution de lumière de signalisation lumineuse modifiée, notamment la distribution de feu de route (LHV') modifiée à partir de segments lumineux individuels, par exemple de segments lumineux placés côte à côte à l'horizontale et/ou superposés à la verticale.

12. Dispositif d'éclairage selon l'une quelconque des revendications 8 à 11, **caractérisé en ce que** le dispositif de reconnaissance de la route comprend au moins un système d'imagerie optique, par exemple au moins une caméra ou au moins un système de caméra, et/ ou au moins un système de localisation assisté par satellite, par exemple un GPS, et/ ou au moins un système de communication car-to-car.

13. Dispositif d'éclairage selon l'une quelconque des revendications 8 à 12, **caractérisé en ce que** le dispositif d'éclairage et conçu sous la forme d'un phare de véhicule automobile.

14. Phare de véhicule automobile, lequel comprend au moins un dispositif d'éclairage selon l'une quelconque des revendications 8 à 12.

15. Système de dispositifs d'éclairage (1) destiné à un véhicule automobile (10), le système de dispositifs d'éclairage (1) comprenant deux phares de véhicule automobile (2, 4), un phare de véhicule automobile gauche et un phare de véhicule automobile droit, **caractérisé**
**en ce qu'**au moins un phare de véhicule automobile, de préférence les deux phares de véhicule automobile (2, 4) du système de dispositifs d'éclairage, comporte ou comportent au moins un dispositif d'éclairage (3, 5) selon l'une quelconque des revendications 8 à 13, et le système de dispositifs d'éclairage (1) comprenant au moins un dispositif de commande (7) selon l'une quelconque des revendications 1 à 7 ou au système de dispositifs d'éclairage étant associé au moins un dispositif de commande selon l'une quelconque des revendications 1 à 7 et au système de dispositifs d'éclairage (1) étant associé au moins un système de reconnaissance d'objets (6) ou le dispositif d'éclairage (3, 5) comprenant au moins un système de reconnaissance d'objets (6), le dispositif de commande (7) recevant des informations sur un objet de la part d'au moins un système de reconnaissance d'objets (6), lequel système de reconnaissance d'objets observant l'environnement situé à l'avant du dispositif d'éclairage (3, 5) ou à l'avant du véhicule automobile (10),
et au système de dispositifs d'éclairage (1) étant associé au moins un dispositif de reconnaissance de la route (6, 6') ou le dispositif d'éclairage (7) comprenant au moins un dispositif de reconnaissance de la route (6, 6'), le dispositif de commande (7) recevant des informations sur la route de la part de l'au moins un dispositif de reconnaissance de la route (6, 6').

16. Véhicule automobile (10) comportant au moins un, notamment deux phares de véhicule automobile (2, 4) selon la revendication 14 ou comportant un système de dispositifs d'éclairage (1) selon la revendication 15.

17. Procédé, destiné à actionner au moins un dispositif d'éclairage (3, 5) selon l'une quelconque des revendications 8 à 13 ou au moins un phare de véhicule automobile selon la revendication 14 ou au moins un système de dispositifs d'éclairages (1) selon la revendication 15,
**caractérisé par** les étapes suivantes, réalisées au moins en partie simultanément, consistant à :
*) déterminer des informations sur la route, de préférence à l'aide d'un dispositif de reconnaissance de la route (6, 6'), lesquels informations sur la route
- contiennent au moins des informations sur le fait si une route (FB) empruntée par le véhicule automobile (10) est praticable uniquement dans un sens de circulation (R) et si la route (FB) comporte une ou plusieurs voies de circulation (FS1, FS2, FS3), et/ ou
- contiennent au moins des informations sur le fait si une ou la route (FB) empruntée par le véhicule automobile (10) est praticable dans le sens de circulation (R) et le nombre de voies de circulation (FS1, FS2, FS3) que comporte la route (FB),
*) déterminer des informations sur un objet, de préférence à l'aide d'au moins un système de reconnaissance d'objets (6), lequel système de reconnaissance d'objets observe l'environnement situé à l'avant du dispositif d'éclairage (3, 5) ou du véhicule automobile (10), les informations sur un objet contenant au moins des informations
- sur le fait si sur cette même voie de circulation (FS1) qui est empruntée par le véhicule automobile (10) se trouve un objet véhicule, notamment un objet véhicule automobile (20), notamment directement à l'avant du véhicule automobile (10) et de préférence à quel éloignement se trouve l'objet véhicule, notamment l'objet véhicule automobile (20) et/ ou
- à quel endroit sur la route (FB), vu dans le sens de circulation (R) se trouvent à l'avant du véhicule automobile (10) des objets véhicules, notamment des objets véhicules automobiles (20, 30, 40) et de préférence à quelle distance (d) du véhicule automobile (10) se trouvent ces objets véhicules, notamment ces objets véhicules automobiles (20, 30, 40).
*) évaluer les informations sur la route et les informations sur un objet, de préférence à l'aide d'un dispositif de commande (7),
*) actionner l'au moins un dispositif d'éclairage ou l'au moins un phare de véhicule automobile ou l'au moins un système de dispositifs d'éclairages (1), de préférence à l'aide d'un dispositif de commande (7) ou du dispositif de commande (7), de telle sorte que
*) lors d'une activation d'une fonction de signalisation par avertisseur lumineux soit générée une distribution de lumière de signalisation lumineuse, notamment sous la forme d'une distribution de feu de route (LHV), notamment pour une période définie, dans une zone à l'avant de l'au moins un dispositif d'éclairage (3, 5) ou dans une zone à l'avant du véhicule automobile (10), au cas où il résulte de l'évaluation des informations sur la route et des informations sur un objet
- que le véhicule automobile (10) se trouve sur une route (Fb) praticable dans une direction (R) comportant deux voies de circulation ou plus (FS1, FS2, FS3), et
que sur la voie de circulation (FS1) du véhicule automobile (10), se trouve un objet véhicule, notamment un objet véhicule automobile (20), précédant le véhicule automobile (10), notamment directement, étant générée une distribution de lumière de signalisation lumineuse modifiée de la sorte, notamment une distribution de feu de route (LHV') modifiée de la sorte de manière que sensiblement seul l'objet véhicule, notamment l'objet véhicule automobile (20) précédent, notamment directement sur la voie de circulation (FS1) du véhicule automobile (10), soit éclairé.
